(19) Europäisches Patentamt
European Patent Office
Office européen des brevets

(11) Veröffentlichungsnummer: 0 095 731
A1

# (12) EUROPÄISCHE PATENTANMELDUNG

(21) Anmeldenummer: **83105200.6**

(22) Anmeldetag: **26.05.83**

(51) Int. Cl.³: **C 09 B 29/10**
// C09B29/01, D06P1/18

(30) Priorität: **01.06.82 DE 3220563**

(43) Veröffentlichungstag der Anmeldung: **07.12.83**
**Patentblatt 83/49**

(84) Benannte Vertragsstaaten: **CH DE FR GB IT LI**

(71) Anmelder: **CASSELLA Aktiengesellschaft, Hanauer Landstrasse 526, D-6000 Frankfurt am Main 61 (DE)**

(72) Erfinder: **Bühler, Ulrich, Dr., Kastanienweg 8, D-8755 Alzenau (DE)**
Erfinder: **Tappe, Horst, Dr., Ringstrasse 9, D-6057 Dietzenbach (DE)**
Erfinder: **Bode, Albert, Finkenweg 1, D-6231 Schwalbach (DE)**
Erfinder: **Hähnke, Manfred, Dr., Behringer Strasse 13, D-6233 Kelkheim (DE)**
Erfinder: **Roth, Kurt, Breckenheimer Strasse 35, D-6238 Hofheim (DE)**

(74) Vertreter: **Urbach, Hans-Georg, Dr. et al, Hanauer Landstrasse 526, D-6000 Frankfurt am Main 61 (DE)**

(54) **Wasserunlösliche Monoazofarbstoffe, ihre Herstellung und ihre Verwendung.**

(57) Azofarbstoffe der Formel I

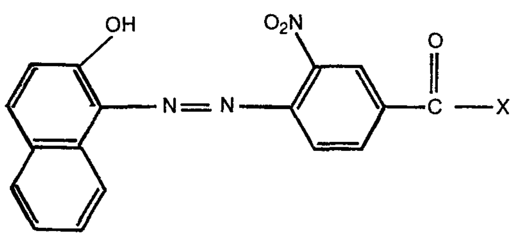 (I)

in der
X $NR^1R^2$, $OR^3$ oder $R^1$ und
$R^1$ gegebenenfalls substituiertes Alkyl mit 1 bis 8 C-Atomen, Cycloalkyl mit 5 oder 6 C-Atomen, Alkenyl mit 3 bis 5 C-Atomen, oder gegebenenfalls substituiertes Phenyl,
$R^2$ Wasserstoff oder gegebenenfalls substituiertes Alkyl mit 1 bis 8 C-Atomen oder Alkenyl mit 3 bis 5 C-Atomen,
$R^3$ Alkyl oder Cycloalkyl mit 5 bis 7 C-Atomen, gegebenenfalls substituiertes Phenyl
bedeuten, ihre Herstellung durch Diazotierung von Aminen der Formel II

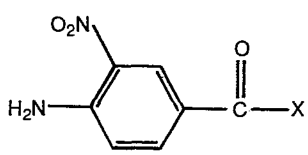 (II)

und Kupplung auf β-Naphthol, sowie ihre Verwendung zum Färben und Bedrucken von hydrophoben Fasermaterialien.

EP 0 095 731 A1

Wasserunlösliche Monoazofarbstoffe, ihre Herstellung und ihre Verwendung

Die vorliegende Erfindung betrifft Azofarbstoffe der Formel I

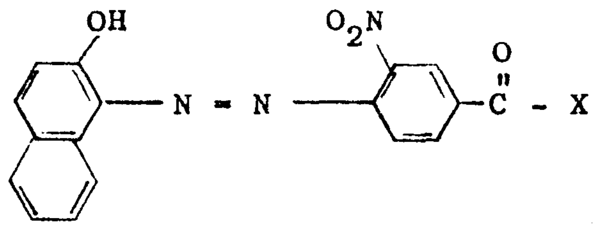

(I)

in der

X $NR^1R^2$ , $OR^3$ oder $R^1$ und

$R^1$ gegebenenfalls substituiertes Alkyl mit 1 bis 8 C-Atomen, Cycloalkyl mit 5 oder 6 C-Atomen, Alkenyl mit 3 bis 5 C-Atomen, oder gegebenenfalls substituiertes Phenyl,

$R^2$ Wasserstoff oder gegebenenfalls substituiertes Alkyl mit 1 bis 8 C-Atomen oder Alkenyl mit 3 bis 5 C-Atomen,

$R^3$ Alkyl oder Cycloalkyl mit 5 bis 7 C-Atomen, gegebenenfalls substituiertes Phenyl

bedeuten, ihre Herstellung durch Diazotierung von Aminen der Formel II

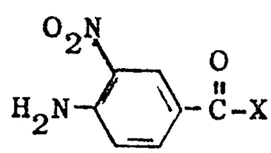

(II)

und Kupplung auf β-Naphthol, sowie ihre Verwendung zum Färben und Bedrucken von hydrophoben Fasermaterialien.

Farbstoffe auf Basis β-Naphthol mit 4-Amino-3-nitrobenzoesäureester als Diazokomponente sind bereits bekannt. So werden in der DE-OS 10 89 094 Farbstoffe beschrieben, die in der Diazokomponente eine Estergruppe enthalten, deren Alkylreste mindestens 8 C-Atome aufweisen und die gut zum Färben von z.B. Fetten und Wachsen eingesetzt werden können. Zum Färben von Polyestermaterialien sind diese Farbstoffe jedoch weniger gut geeignet.

In der japanischen Patentschrift 53-38780 werden Farbstoffe beschrieben, die in der Diazokomponente Estergruppen aufweisen, deren Alkylreste 1 bis 4 C-Atome haben. Sie färben Polyester in brillanten orangen Tönen, zeigen jedoch noch Mängel im Hinblick auf die Echtheiten der Färbung und insbesondere im Hinblick auf die Applikation.

Es wurde nun überraschenderweise gefunden, daß die erfindungsgemäßen Farbstoffe diese Mängel nicht aufweisen.

Im Vergleich zu den in der japanischen Patentschrift beschriebenen Farbstoffen der Formel

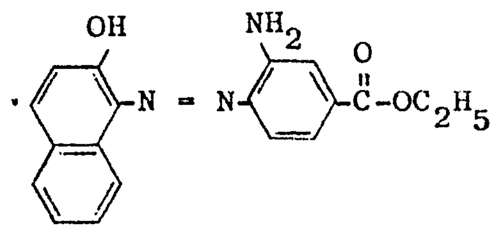

zeigen z.B. die erfindungsgemäßen Farbstoffe der Formel I, in der X für $NR^1R^2$ oder für $R^1$ steht, eine geringere pH-Empfindlichkeit beim Färben aus wäßrigem Bad. Die erfindungsgemäßen Farbstoffe, in denen X für $R^1$ steht, bauen außerdem auf der Faser besser auf, die Farbstoffe, in denen X für $NR^1R^2$ steht, besitzen zusätzlich höhere Thermofixierechtheit, und die Farbstoffe, in denen X für $OR^3$ steht, besitzen ein besseres Aufbau- und Ausziehvermögen und verbesserte pH-Beständigkeit.

Diese Überlegenheit ergibt sich beim Färben und Bedrucken aller technisch bedeutenden hydrophoben Fasermaterialien, insbesondere auf Polyester-, Triacetat- und Polyamidmaterialien und nach allen gängigen Färbeverfahren und Druckverfahren.

Die erfindungsgemäßen Farbstoffe eignen sich somit im Gegensatz zu den bekannten hervorragend zur Herstellung farbstarker brillanter Färbungen und Drucke auf den genannten Fasermaterialien.

Alkylreste mit 1 bis 8 C-Atomen, die für $R^1$ und $R^2$ stehen können, sind Methyl, Ethyl, n-Propyl, i-Propyl, n-Butyl, sek.-Butyl, i-Butyl, und tert.-Butyl, n-Pentyl, 2-Methylbutyl, 3-Methylbutyl, 2-Methylbutyl-2, 3-Methylbutyl-2, n-Hexyl, n-Heptyl, 5-Methylhexyl-2, n-Octyl, 2-Ethylhexyl, 6-Methylheptyl-2.

Alkylreste mit 5 bis 7 C-Atomen, die für $R^3$ stehen können, sind n-Pentyl, 2-Methylbutyl, 3-Methylbutyl, 2-Methylbutyl-2, 3-Methylbutyl-2, n-Hexyl, n-Heptyl, 5-Methylhexyl-2.

Cycloalkylreste mit 5 oder 6 C-Atomen, die für $R^1$ und $R^3$ stehen können, sind Cyclopentyl und Cyclohexyl.

Alkenylreste mit 3 bis 5 C-Atomen, die für $R^1$ und $R^2$ stehen können, sind Allyl, Methallyl, Crotyl; gegebenenfalls substituierte Phenylreste, die für $R^1$ und $R^3$ stehen können, sind Phenyl, o-, m- oder p-Methylphenyl, -Chlorphenyl, -Methoxyphenyl und Ethoxyphenyl.

Substituenten an den gegebenenfalls substituierten Alkylresten, die für $R^1$ und $R^2$ stehen können, sind z.B. Chlor, Brom, Cyan, Alkoxycarbonyl mit insgesamt bis zu 5 C-Atomen, Phenyl, Hydroxy, Alkylcarbonyloxy mit insgesamt bis zu 4 C-Atomen, Alkoxy mit 1 bis 4 C-Atomen, Cycloalkoxy mit 5 oder 6 C-Atomen, Alkenoxy mit 3 bis 5 C-Atomen, Phenoxy, Benzyloxy, Alkoxyalkoxy mit insgesamt 3 bis 8 C-Atomen, Phenoxyalkoxy mit 2 bis 4 C-Atomen im Alkoxyrest, Cycloalkoxyalkoxy mit 7 bis 10 C-Atomen, Alkenoxyalkoxy mit 5 bis 9 C-Atomen; Alkoxycarbonylreste mit insgesamt bis zu 5 C-Atomen sind z.B. Methoxycarbonyl, Ethoxycarbonyl, i-Propoxycarbonyl, n-Butoxycarbonyl oder i-Butoxycarbonyl, n-Amyloxycarbonyl, i-Amyloxycarbonyl. Alkylcarbonyloxyreste mit insgesamt bis zu 4 C-Atomen sind z.B. Acetoxy, Propionyloxy, n-Butyroxy, i-Butyroxy.

Alkoxyreste mit 1 bis 4 C-Atomen sind z.B. Methoxy, Ethoxy, n-Propoxy, i-Propoxy, n-Butoxy, i-Butoxy.

Cycloalkoxyreste mit 5 oder 6 C-Atomen sind Cyclopentoxy und Cyclohexoxy.

Alkenoxyreste mit 3 bis 5 C-Atomen sind z.B. Prop-2-enoxy, But-2-enoxy, 2-Methylprop-2-enoxy.

Substituenten an gegebenenfalls substituiertem Phenyl, das für $R^1$, $R^3$ oder $R^4$ stehen kann, sind z.B. Alkyl mit 1 bis 4 C-Atomen, Alkoxy mit 1 bis 4 C-Atomen, Chlor oder Brom.

Bevorzugte Substituenten an den gegebenenfalls substituierten Alkylresten, die für $R^1$ und $R^2$ stehen können, sind Hydroxy, Alkylcarbonyloxy mit insgesamt bis zu 4 C-Atomen, Cycloalkoxy mit 5 oder 6 C-Atomen, Alkenoxy mit 3 bis 5 C-Atomen, Phenoxy, Benzyloxy, Phenyl und insbesondere Alkoxy-Substituenten mit 1 bis 4 C-Atomen. Bevorzugte substituierte Alkylreste $R^1$ und $R^2$ in für X stehenden Resten der Formel $-NR^1R^2$ sind in 2- oder 3-Stellung substituiertes Propyl-(1), in 1-Stellung substituiertes Propyl-(2), in 2- oder in 3-Stellung substituiertes 2-Methylpropyl-(1), in 1-Stellung substituiertes 2-Methylpropyl-(2), Tetramethylen, in 2- oder 3-Stellung substituiertes Butyl-(1) und in 3- oder 4-Stellung substituiertes Butyl-(2).

Besonders bevorzugte substituierte Alkylreste sind Ethylen und Trimethylen. Besonders bevorzugt sind auch erfindungsgemäße Farbstoffe, in denen $R^2$ Wasserstoff ist.

Bevorzugte Kombinationen $R^1/R^2$ in für X stehenden Resten $NR^1R^2$ sind solche , in denen die Summe der Kohlenstoffatome der Reste $R^1$ und $R^2$ größer oder gleich 3 ist.

Bevorzugt sind auch Kombinationen, in denen $R^2$ für Wasserstoff und $R^1$ für lineares oder verzweigtes unsubstituiertes , primäres oder sekundäres Alkyl mit 3 bis 7 C-Atomen steht. Besonders bevorzugt sind dabei sekundäre Alkylreste. Bevorzugt sind ferner Kombinationen, in denen $R^2$ Wasserstoff und $R^1$ Ethyl oder Propyl, das endständig durch Alkoxy mit 1 bis 4 C-Atomen substituiert ist, bedeutet.

Bevorzugt sind weiter Kombinationen, in denen $R^1$ und $R^2$

gleich sind und unsubstituiertes Alkyl mit 2 bis 5 C-Atomen bedeuten, aber auch Kombinationen, in denen $R^2$ Methyl, Ethyl oder n-Propyl ist und $R^2$ für unsubstituiertes Alkyl mit 2 bis 5 C-Atomen bzw. alkoxy-substituiertes Ethyl oder Propyl mit 1 bis 4 C-Atomen in der Alkoxygruppe, 2-Hydroxyethyl oder 2-Alkylcarbonyloxyethyl mit 2-4 C-Atomen in der Alkylcarbonylgruppe steht. Bevorzugte für X stehende Reste $R^1$ sind unsubstituierte Alkylreste mit 1 bis 5 C-Atomen sowie durch Ethoxy mit 1 bis 4 C-Atomen oder gegebenenfalls substituiertes Phenoxy substituiertes Methyl oder Ethyl, wobei substituierte Phenoxyreste, vorzugsweise durch Chlor, Methyl, Methoxy oder Ethoxy in o-, m- oder p-Stellung substituiert sind.

Besonders bevorzugte für X stehende substituierte Alkylreste $R^1$ sind Dimethylmethylen, Ethylen und Trimethylen. Ein besonders bevorzugter Rest ist Methylen.

Bevorzugte Farbstoffe sind solche, in denen X für $NR^1R^2$ und $R^1$ steht, wobei $R^1$ und $R^2$ die jeweils als bevorzugt angegebenen Bedeutungen besitzen.

Die Herstellung der erfindungsgemäßen Farbstoffe der Formel I erfolgt, indem man ein Amin der allgemeinen Formel II diazotiert und auf ß-Naphthol kuppelt. Die Diazotierung des Amins der Formel II geschieht in an sich bekannter Weise durch Einwirkung von salpetriger Säure oder salpetrige Säure abspaltende Verbindungen. Beispielsweise können die Amine in Schwefelsäure, Salzsäure oder in niederen aliphatischen Carbonsäuren, die gegebenenfalls mit Wasser verdünnt werden können, wie z.B. Ameisensäure, Essigsäure oder Propionsäure, suspendiert oder gelöst und bei $0^o$ bis $50^oC$ durch Zusatz von Nitrosylschwefelsäure oder Natriumnitrit diazotiert werden.

Die Kupplung wird üblicherweise in Wasser unter Zusatz einer Base durchgeführt, die für eine ausreichende Konzentration an Naphtholat-Anionen sorgt. Basen, die hierfür bekannterweise eingesetzt werden, sind z.B. Alkalihydroxyde oder Alkalisalze schwacher Säuren, wie z.B. Natrium- oder Kaliumhydroxyd, Soda, Pottasche oder auch Natriumhydrogencarbonat . Darüber hinaus werden zweckmäßigerweise Puffersubstanzen zugesetzt, die den Säureüberschuß der Diazoniumlösung und die bei der Kupplung frei werdende Säure abfangen. Solche Puffer sind bekanntlich ebenfalls vorzugsweise Alkalisalze schwacher Säuren, wie z.B. Natriumacetat oder Natriumhydrogenphosphat.

Die Kupplung kann auch in einer niederen aliphatischen Carbonsäure, wie z.B. Essigsäure, die zweckmäßigerweise mit Wasser verdünnt ist, bzw. in einer Mischung aus Wasser und einem in Wasser wenig löslichen Alkohol, wie n- oder i-Butanol, stattfinden. Zweckmäßigerweise wird auch dabei das System durch Basen, wie Natriumacetat oder Natriumhydrogenphosphat, gepuffert. Die Kupplungstemperatur liegt in der Regel zwischen $0^o$ und $30^oC$.

Die Amine der Formel II in der X für $OR^3$ steht, können nach an sich bekannten Methoden hergestellt werden, indem man 3-Nitro-4-aminobenzoesäure verestert, wie es z.B. in Liebigs Ann. Chem. 371, 168 (1909) beschrieben wird. Sie lassen sich auch durch Umesterung eines 3-Nitro-4-aminobenzoesäureesters, der sich von einem niedrigsiedenden Alkohol ableitet, mit einem Alkohol der Formel $R^3OH$ herstellen. Die Umesterung kann, wie es z.B. in Weygand-Hilgetag "Organisch-chemische Experimentierkunst", Verlag J.A. Barth, Leipzig (1970), S. 385, und dort zitierter Literatur beschrieben wird, ausgeführt werden.

Die Amine der Formel II, in der X für $R^1$ steht, lassen sich z.B. aus den entsprechenden 4-Halogen-3-nitroarylketonen durch Umsetzung mit Ammoniak herstellen, wie es für den Fall aromatischer Reste $R^1$ in Ber. Deut. Chem. Ges. 47, 2778 (1914) und für den Fall aliphatischer Reste $R^1$ in Ber. Deut. Chem. Ges. 65, 1333 (1932)beschrieben ist.

Die Amine der Formel II, in der X für $NR^1R^2$ steht, lassen sich in analoger Weise aus den 4-Halogen-3-nitrobenzoesäureamiden, deren Sy these z.B. in Rec. Trav. Chim. 19 55 beschrieben ist, herstellen.

Die erfindungsgemäßen Farbstoffe eignen sich insbesondere zum Färben und Bedrucken von hydrophoben Fasermaterialien, wie beispielsweise Polyamid, Cellulose-2 1/2-acetat, Cellulosetriacetat, und insbesondere Polyestermaterialien wie z.B. Polyethylenglykoltheraphthalat. Sie liefern hierauf nach üblichen Färbe- und Druckverfahren farbstarke orange Färbungen und Drucke mit sehr guten Echtheitseigenschaften, insbesondere sehr guter Licht- und Thermofixierechtheit.

Das Färben der genannten Fasern, die einzeln oder im Gemisch mit anderen Faserarten, wie z.B. Baumwolle, regenerierter Zellulosefasern oder Wolle vorliegen können, mit den erfindungsgemäßen Farbstoffen erfolgt in an sich bekannter Weise zweckmäßig aus wäßriger Suspension in Gegenwart von Carriern zwischen etwa 80 bis 110°C, in Abwesenheit von Carriern zwischen etwa 110 bis 140°C, sowie nach dem sogenannten Thermofixierverfahren bei etwa 180 bis 230°C. Das Bedrucken der genannten Materialien kann so durchgeführt werden, daß die mit den neuen Farbstoffen bedruckte Ware in Gegenwart eines Carriers bei Temperaturen zwischen etwa 80 bis 110°C oder auch in Abwesenheit eines Carriers bei etwa 110 bis 180°C gedämpft oder auch nach dem sogenannten Thermofixierverfahren bei etwa 180 bis 230°C behandelt wird.

Sofern Textilmaterialien gefärbt oder bedruckt werden sollen, die neben den genannten hydrophoben synthetischen Fasern noch natürliche Fasern, insbesondere die oben genannten enthalten, können die erfindungsgemäßen Farbstoffe auch mit anderen Farbstoffklassen, wie z.B. Küpen-, Direkt- oder Reaktivfarbstoffen, gemeinsam eingesetzt werden.

Es ist daher in diesen Fällen möglich, auch Mischungen

der erfindungsgemäßen Farbstoffe mit den anderen Farbstoffklassen zu applizieren und die Farbstoffe dann in an sich bekannter Weise gleichzeitig oder nacheinander zu fixieren.

Die erfindungsgemäßen Farbstoffe eignen sich auch zum Färben der vorstehend aufgeführten hydrophoben Materialien aus organischen Lösungsmitteln und zum Färben in der Masse.

Die Farbstoffe der Formel I eignen sich auch zum Färben von organischen Lösungsmitteln, Mineralölprodukten, Wachsen, Kunststoffen und Oberflächenbelägen.

Die folgenden Ausführungsbeispiele veranschaulichen die Herstellung der erfindungsgemäßen Farbstoffe und Möglichkeiten zu ihrer Anwendung.

Beispiel 1

23,8 g 4-Amino-3-nitrobenzoesäure-n.butylamid werden in 100 ml Eisessig durch Zutropfen von 33 g 40,5%iger Nitrosylschwefelsäure bei $15^{o}C$ diazotiert. Die Diazolösung läßt man bis $0^{o}$ bis $10^{o}C$ in einer Lösung aus 15,8g ß-Naphthol, 120 ml 1n Natronlauge, 70 g wasserfreiem Natriumacetat und 1000 g Eis/Wasser einlaufen. Nach beendeter Kupplung wird der entstandene Farbstoff abgesaugt, mit Wasser neutral und salzfrei gewaschen und unter vermindertem Druck getrocknet. Man erhält auf diese Weise 37,8 g des Farbstoffs der Formel

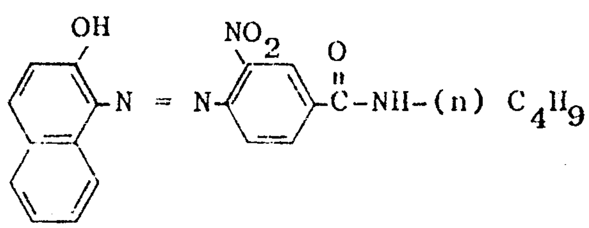

Beispiel 2

0,5 g des feindispergierten Farbstoffs des Beispiels 1 werden in 2000 g Wasser eingerührt. Dann wird die Dispersion mit Essigsäure auf einen pH-Wert von 5 bis 6 eingestellt und mit 4,0 g Ammoniumsulfat sowie 2,0 g eines handelsüblichen Dispergiermittels auf Basis eines Naphtha

linsulfonsäure-Formaldehyd-Kondensats versetzt. In die so erhaltene Färbeflotte bringt man 100 g eines Polyestergewebes auf Basis von Polyethylenglykoltherephthalat ein und färbt in einem Färbeautoklaven 1 Stunde bei 130°C.

Nach anschließendem Spülen, reduktiver Nachbehandlung mit einer 0,2%igen alkalischen Natriumdithionitlösung während 15 Minuten bei 70 bis 80°C, Spülen und Trocknen, erhält man eine farbstarke, brillante orange Färbung mit sehr guten coloristischen Eigenschaften.

Beispiel 3

18 g 4-Amino-3-nitroacetophenon werden wie im Beispiel 1 beschrieben diazotiert und auf β-Naphthol gekuppelt. Man erhält 32,4 g eines Farbstoffs der Formel

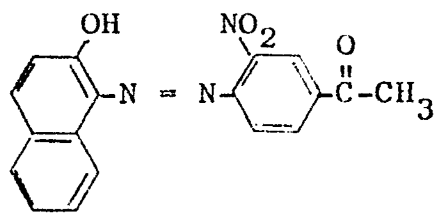

Beispiel 4

20,0 g des Farbstoffs des Beispiels 3 werden in feiner Verteilung einer Druckpaste, die 45,0 g Johannisbrotkernmehl, 6,0 g 3-nitrobenzolsulfonsaures Natrium und 3,0 g Zitronensäure auf 1000 g enthält , einverleibt. Mit dieser Druckpaste erhält man auf einem Polyestergewebe nach dem Bedrucken, Trocknen und Fixieren im Thermofixierrahmen während 40 Sekunden bei 195°C, Spülen und Fertigstellung, wie im Beispiel 2 beschrieben, einen farbstarken brillanten orangen Druck mit sehr guten coloristischen Eigenschaften.

Analog den Beispielen 1 und 3 lassen sich erfindungsgemäße Farbstoffe der Formel I herstellen, in denen der Rest X die in der folgenden Tabelle aufgeführten konkreten Bedeutungen hat und die auf hydrophoben Fasern insbesondere auf Polyesterfasern sehr brillante Färbungen mit ausgezeichneten Echtheiten und hoher Farbstärke liefern.

**Tabelle**

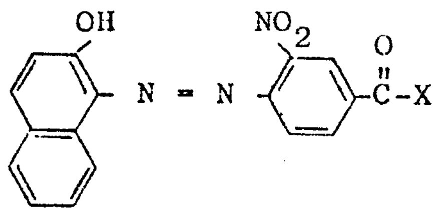

X = $NR^1R^2$

| $R^1$ | $R^2$ | |
|---|---|---|
| $C_2H_5$ | H | brillantes Orange |
| $i-C_3H_7$ | H | " |
| $n-C_4H_9$ | H | " |
| Sek.-$C_4H_9$ | H | " |
| $n-C_5H_{11}$ | H | " |
| $n-C_6H_{13}$ | H | " |
| $i-C_6H_{13}$ | H | " |
| $n-C_7H_{15}$ | H | " |
| $CH_2CH=CH_2$ | H | " |
| $CH_2-C_6H_5$ | H | " |
| $(CH_2)_2-CO-O-C_2H_5$ | H | " |
| $(CH_2)_2-CN$ | H | " |
| $(CH_2)_2-O-COCH_3$ | H | " |
| $(CH_2)_4-O-COCH_3$ | H | " |
| $(CH_2)_2-O-CH_3$ | H | " |
| $(CH_2)_2-O-C_2H_5$ | H | " |
| $(CH_2)_2-O(n)-C_4H_9$ | H | " |
| $(CH_2)_2-O-C_6H_5$ | H | " |
| $CH(CH_2OCH_3)C_2H_5$ | H | " |
| $(CH_2)_2-O-C_6H_5$ | H | " |
| $(CH_2)_2-O-(CH_2)_2-O-CH_3$ | H | " |

0095731

X = $NR^1 R^2$

| $R^1$ | $R^2$ | |
|---|---|---|
| $(CH_2)_2$-O-$(CH_2)_2$-O-$C_2H_5$ | H | brillantes Orange |
| $(CH_2)_3$-O-$C_2H_5$ | H | " |
| $C_2H_5$ | $C_2H_5$ | " |
| n-$C_3H_7$ | (n)-$C_3H_7$ | " |
| n-$C_5H_{11}$ | (n)-$C_5H_{11}$ | " |
| $CH_3$ | (n)-$C_4H_9$ | " |
| $CH_3$ | $CH_2CH=CH_2$ | " |
| $CH_3$ | $(CH_2)_2OH$ | " |
| $CH_3$ | $(CH_2)_2O-COCH_3$ | " |
| $CH_3$ | $-CH_2CH(OCOCH_3)CH_2Cl$ | " |
| $C_2H_5$ | $CH_2C_6H_5$ | " |
| $C_2H_5$ | $(CH_2)_2O-C_2H_5$ | " |
| $C_6H_5$ | $(CH_2)_2O-COCH_3$ | " |
| $CH_2CH=CH_2$ | $CH_2CH=CH_2$ | " |
| i-$C_4H_9$ | $(CH_2)_2OH$ | " |
| $(CH_2)_2CO-OCH_3$ | H | " |
| (Cyclo)-$C_6H_{11}$ | $(CH_2)_2OH$ | " |
| (Cyclo)-$C_6H_{11}$ | $(CH_2)_2$-O-CO-$C_2H_5$ | " |
| (i)-$C_3H_7$ | $(CH_2)_2OH$ | " |
| (i)-$C_3H_7$ | $(CH_2)_2O-CH_3$ | " |
| (n)-$C_4H_9$ | $(CH_2)_2OH$ | " |
| (n)-$C_4H_9$ | $(CH_2)_2O-CO-C_6H_5$ | " |

$X = OR^3$

| $R^3$ |
|---|
| $n-C_5H_{11}$ |
| $(CH_2)_2CH\ (CH_3)_2$ |
| $n-C_6H_{13}$ |
| $n-C_7H_{15}$ |
| $(Cyclo)-C_6H_{11}$ |
| $(Cyclo)-C_5H_9$ |
| $C_6H_5$ |
| $4-CH_3-C_6H_4-$ |
| $2-CH_3-C_6H_4-$ |
| $4-i-C_3H_7-C_6H_4-$ |

$X = R^1$

| $R^1$ | |
|---|---|
| $CH_3$ | $CH_2O(i)-C_4H_9$ |
| $C_2H_5$ | $(CH_2)_3-OH$ |
| $i-C_3H_7$ | |
| $n-C_3H_7$ | |
| $Sek.-C_4H_9$ | |
| $i-C_4H_9$ | |
| $CH-(C_2H_5)_2$ | |
| $CH(CH_3)_5$ | |
| $CH((n)-C_3H_7)_2$ | |
| $(n)-C_5H_{11}$ | |
| $(i)-C_7H_{15}$ | |
| $CH_2-O-CH_3$ | |
| $CH_2-O-C_2H_5$ | |
| $CH_2-O-C_6H_5$ | |

## Patentansprüche

1. Von wasserlöslichemachenden Gruppen freie Azofarbstoffe der Formel I

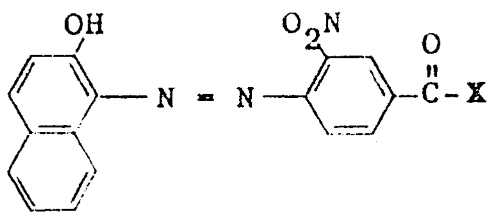

(I)

in der X $NR^1R^2$, $OR^3$ oder $R^1$ und

$R^1$ gegebenenfalls substituiertes Alkyl mit 1 bis 8 C-Atomen, Cycloalkyl mit 5 oder 6 C-Atomen, Alkenyl mit 3 bis 5 C-Atomen, oder gegebenenfalls substituiertes Phenyl,

$R^2$ Wasserstoff oder gegebenenfalls substituiertes Alkyl mit 1 bis 8 C-Atomen oder Alkenyl mit 3 bis 5 C-Atomen,

$R^3$ Alkyl oder Cycloalkyl mit 5 bis 7 C-Atomen, gegebenenfalls substituiertes Phenyl

bedeuten.

2. Verfahren zur Herstellung von Monoazofarbstoffen der Formel I des Anspruchs 1, dadurch gekennzeichnet, daß man ein Amin der allgemeinen Formel II

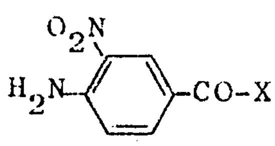

(II)

worin X die in Anspruch 1 genannten Bedeutungen hat, in an sich bekannter Weise diazotiert und auf β-Naphthol kuppelt.

3. Verwendung von Farbstoffen der Formel I des Anspruchs 1 und deren Mischungen mit Farbstoffen anderer Farbstoffklassen zum Färben und Bedrucken von hydrophoben Fasermaterialien.

Europäisches Patentamt

# EUROPÄISCHER RECHERCHENBERICHT

0095731
Nummer der Anmeldung

EP 83 10 5200

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | FR-A-1 127 885 (CIBA) * Seite 1, linke Spalte ganz; Seite 5, Beispiel 1 und Tabelle I, Beispiele 1 bis 3 * | 1,3 | C 09 B 29/10 // C 09 B 29/01 D 06 P 1/18 |
| D,Y | DE-B-1 089 094 (CIBA) * Spalten 1 und 2, ganz; Spalten 7 und 8, Beispiel 1 und Tabelle I, ganz * | 1,3 | |
| Y | CA-A-1 096 557 (AMERICAN COLOR & CHEM. CORP.) * Seite 6, ganz * & JP - A - 53 38780 (cat. D) | 1-3 | |
| A | US-A-2 217 693 (McNALLY, DICKEY) * Seite 1, ganz * | 1-3 | RECHERCHIERTE SACHGEBIETE (Int. Cl. 3) |
| A | FR-A- 853 177 (I.G. FARBEN) * Seite 1, ganz * | 1-3 | C 09 B 29/00 |
| A | US-A-2 200 005 (McNALLY, DICKEY) * Seite 1, ganz * | 1-3 | |

Der vorliegende Recherchenbericht wurde für alle Patentansprüche erstellt.

| Recherchenort | Abschlußdatum der Recherche | Prüfer |
|---|---|---|
| DEN HAAG | 24-08-1983 | GREEN C.H. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03.82